# EUROPEAN PATENT SPECIFICATION

(11) **EP 3 674 754 B1**
(45) Date of publication and mention of the grant of the patent: **27.04.2022**
(21) Application number: 18848169.1
(22) Date of filing: 09.08.2018
(51) Int. Cl.: G01V 8/12, G01S 17/04, G01V 8/14

(54) **RAIN SENSOR**
REGENSENSOR
CAPTEUR DE PLUIE

(30) Priority: 25.08.2017 JP 2017162071
(43) Date of publication of application: 01.07.2020
(73) Proprietor: Asahi Kasei Kabushiki Kaisha, Tokyo 100-0006 (JP)
(72) Inventor: SASAKI, Hiroyuki, Chiyoda-ku, Tokyo 101-8101 (JP)
(74) Representative: Hoffmann Eitle
(86) International application number: PCT/JP2018/029971
(87) International publication number: WO 2019/039308

(56) References cited:
- CN-A- 104 369 715
- DE-A1-102012 211 218
- JP-A- 2002 257 717
- JP-A- 2005 241 339
- JP-A- 2006 056 415
- JP-A- 2007 145 214
- JP-A- 2007 145 214
- JP-A- 2013 011 559
- JP-A- 2015 072 167
- US-A- 5 391 891
- US-A1- 2017 001 601

## Description

### Technical Field

The present invention relates to rain sensors configured to detect raindrops adherent to an outer surface of a windshield glass of a vehicle.

### Background Art

In rain sensors that have been conventionally proposed, light from a light emitting source such as an LED enters a windshield glass from a vehicle cabin inner side, and reflected toward an inner surface at an interface between an outer surface of the windshield glass and an outside world, and then a light receiving element, such as, for example, a photodiode receives the reflected light (for example, see PTL 1). In such rain sensors, when raindrops are adherent to the windshield glass, the amount of reflection on the outer surface of the windshield glass varies due to the raindrops, and the amount of received light received by the light receiving element fluctuates, so that the presence or absence of adherent raindrops is detected on the basis of an output signal of the light receiving element.

### Citation List

### Patent Literature

PTL 1: JP 2011-183838 A

Document DE 10 2012 211218 A1 relates to a raindrop detecting device that has a light-emitting element which emits a reference light and a light-receiving element which receives the reference light reflected from a windshield of a vehicle. The light-receiving element outputs a signal according to an intensity of the received reference light. An inner surface temperature detecting element detects a temperature of an inner surface of the windshield and outputs a signal according to the detected temperature of the inner surface.

Document JP 2007 145214 A relates to a window fog detection device comprising a humidity operation circuit.

### Summary of Invention

### Technical Problem

However, in the case of such optical rain sensors, even when fogging occurs on the vehicle cabin inner side of the windshield glass, the amount of received light received by the photoelectric conversion element fluctuates, due to which although there are no raindrops, it may be erroneously detected that raindrops are present. Therefore, when driving a wiper on the basis of the detection signal of a rain sensor, erroneous detection by the rain sensor causes operation of the wiper although it is actually not raining. As a result, the occupant (s) of the vehicle will feel strange, reducing merchantability.

Thus, there has been a desire for a rain sensor capable of avoiding erroneously detecting the occurrence of fogging on the windshield glass as the presence of raindrops.

The present invention has been made in view of the above conventional unsolved problem, and it is an object of the present invention to provide a more reliable rain sensor that avoids erroneous detection.

### Solution to Problem

In order to achieve the above object, according to the present invention, there is provided a rain sensor including: an optical detection unit configured to output a detection result different in when a raindrop is adherent to a windshield glass of a vehicle and when no raindrop is adherent to the windshield glass; a temperature/humidity sensor configured to detect temperature and humidity in a vehicle cabin of the vehicle; a contactless temperature sensor configured to contactlessly detect temperature of the windshield glass; a fogging detection unit configured to detect that fogging has occurred or is likely to occur on a vehicle cabin inner side of the windshield glass on a basis of detection signals of the temperature/humidity sensor and the contactless temperature sensor; and a raindrop determination unit configured to determine whether or not a raindrop is adherent to the windshield glass on a basis of a detection result of the optical detection unit and a detection result of the fogging detection unit, wherein a region for detecting the temperature by the contactless temperature sensor includes a region for detecting the raindrop by the optical detection unit.

### Advantageous Effects of Invention

According to the present invention, it is determined whether or not a raindrop is adherent to the windshield glass on the basis of the detection result of the optical detection unit and the detection result of the fogging detection unit. Thus, it can be avoided that the occurrence of fogging on the windshield glass is erroneously detected as the adhesion of a raindrop, so that reliability of the rain sensor can be improved.

### Brief Description of Drawings

FIGS. 1A and 1B are a structural diagram illustrating one example of a rain sensor according to one embodiment of the present invention;
FIG. 2 is a functional block diagram illustrating the one example of the rain sensor;
FIG. 3 is a flowchart illustrating one example of a processing procedure of calculation processing by a received light amount determination unit;
FIG. 4 is a flowchart illustrating one example of a processing procedure of calculation processing by a fogging detection unit; and
FIG. 5 is a flowchart illustrating one example of a processing procedure of calculation processing by a raindrop determination unit.

### Description of Embodiments

In the following detailed description, lots of specific and concrete configurations will be described to provide complete understanding of embodiments of the present invention. However, it would be apparent that other embodiments can be carried out without such specific and concrete configurations. Further, the following embodiments do not limit the invention according to the claims, but include all combinations of characteristic configurations described in the embodiments.

Referring to the drawings, an embodiment of the present invention will be described. In the description of the drawings, the drawings are schematic.

### (Structure of Embodiment)

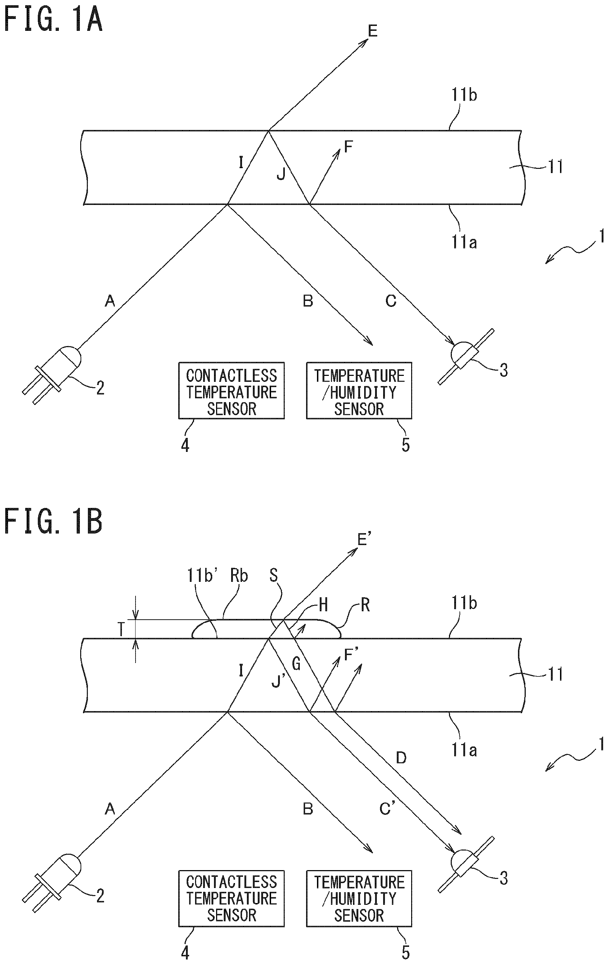

FIGS. 1A and 1B are a structural diagram illustrating one example of a rain sensor 1 according to the present invention.

The rain sensor 1 is provided in a vehicle cabin, and detects that a raindrop is adherent to a windshield glass. A wiper control device 15, which will be described later, is incorporated in the vehicle, and drive controls a wiper 16, which will be described later, on the basis of the detection result of the rain sensor 1.

As illustrated in FIGS. 1A and 1B, the rain sensor 1 includes a light emitting source 2 such as an LED, a light receiving element 3 configured to receive light from the light emitting source 2 reflected on a windshield glass 11, a contactless temperature sensor 4 configured to contactlessly detect temperature of the windshield glass 11, and a temperature/humidity sensor 5 configured to detect temperature and humidity in a vehicle cabin. The light emitting source 2 and the light receiving element 3, as well as the contactless temperature sensor 4 and the temperature/humidity sensor 5 are provided, for example, on an unillustrated rear-view mirror. The contactless temperature sensor 4 is arranged at a position where an average temperature can be detected in the vicinity of an upper center portion of the windshield glass 11 in front of the root of the rear-view mirror. Additionally, the light emitting source 2 and the light receiving element 3 are arranged at a position, in the vicinity of the upper center portion of the windshield glass 11, where reflected light of the light emitting source 2 reflected at an interface between an outer surface 11b of the windshield glass 11 and an outside can be received at the center of the light receiving element 3. In other words, a temperature detection region of the contactless temperature sensor 4 is arranged so as to include a detection region for the reflected light of the light emitting source 2 reflected at the interface between the outer surface 11b and the outside, which is received by the light receiving element 3, and the contactless temperature sensor 4 is adapted to detect temperature of the region including the detection region on the windshield glass 11 where the amount of received light obtained by a detection signal of the light receiving element 3 has been acquired.

In a state when there is no fogging occurring on an inner surface 11a of the windshield glass 11, and no raindrop is adherent to the outer surface 11b thereof, as illustrated in FIG. 1A, a light amount A of light emitted by the light emitting source 2 is divided into a light amount I that enters the windshield glass 11 on the inner surface 11a of the windshield glass 11 and a light amount B that is reflected on the inner surface 11a thereof. The light amount I entering the windshield glass 11 is divided into a light amount E that enters the air at the interface between the outer surface 11b of the windshield glass 11 and the outside and a light amount J that is reflected at the interface therebetween. Additionally, the light amount J reflected into the windshield glass 11 is divided into a light amount C that enters the vehicle cabin on the inner surface 11a of the windshield glass 11 and a light amount F that is reflected on the inner surface 11a thereof. The light emitting source 2 and the light receiving element 3 are arranged such that light having the light amount C emitted from the light emitting source 2, reflected on the outer surface 11b of the windshield glass 11, and entering the vehicle cabin is received on a front face of the light receiving element 3, i.e., at the center thereof.

On the other hand, when a raindrop R adheres to the outer surface 11b of the windshield glass 11, as illustrated in FIG. 1B, the light amount A of the light emitted by the light emitting source 2 is divided into the light amount B that is reflected on the inner surface 11a of the windshield glass 11 and the light amount I that enters the windshield glass 11. Light having the light amount I entering the windshield glass 11 is divided into light having a light amount S that enters the raindrop R and light having a light amount J' that is reflected into the windshield glass 11 at the interface 11b'between the windshield glass 11 and the raindrop R. The light having the light amount J' reflected into the windshield glass 11 is again divided into light having a light amount F' that is reflected into the windshield glass 11 and light having a light amount C' that enters the air on the inner surface 11a of the windshield glass 11. In this case, the light amount J' is smaller than the light amount J in FIG. 1A. This is because the refractive index of the windshield glass 11 and the refractive index of the raindrop R are larger than the refractive index of the air, due to which the light amount S that is larger than the light amount E in FIG. 1A enters the raindrop R, and the light amount J' becomes smaller than the light amount J. As a result, the light amount C' going to the light receiving element 3 becomes smaller than the light amount C in the case when the raindrop R is not adherent to the windshield glass 11.

The light having the light amount S entering the raindrop R is divided into light having a light amount E' that enters the air and light having a light amount H that is reflected into the raindrop R on an outer surface Rb of the raindrop R. The reflected light having the light amount H is divided into light having a light amount G that enters the windshield glass 11 and light that is reflected at an interface 11b' between the windshield glass 11 and the raindrop R, and the light having the light amount G entering the windshield glass 11 is divided into light having a light amount D that enters the air and light that is reflected on the inner surface 11a of the windshield glass 11.

The light receiving element 3 receives parts of the light amounts D and B, and the light amount C'. However, when a thickness T of the raindrop R increases, a ratio at which an optical axis of the light receiving element 3 receives the light having the light amount D decreases, reducing output of the light receiving element 3. In other words, an optical path of light from the light emitting source 2 having a constant output and the amounts of incident light and reflected light vary due to the presence or absence of the raindrop R on the windshield glass 11 and the thickness T of the raindrop R. Thus, when the raindrop R is adherent thereto, the amount of light received in the light receiving element 3 becomes smaller than when the raindrop R is not adherent thereto.

A received light amount determination unit 6a, which will be described later, determines the magnitude of the amount of light received in the light receiving element 3 that varies due to the raindrop.

The contactless temperature sensor 4 is formed by, for example, an infrared sensor, and contactlessly detects surface temperature of the windshield glass 11 by detecting infrared light emitted from the windshield glass 11.

The temperature/humidity sensor 5 detects an internal air temperature and humidity in the vehicle cabin.

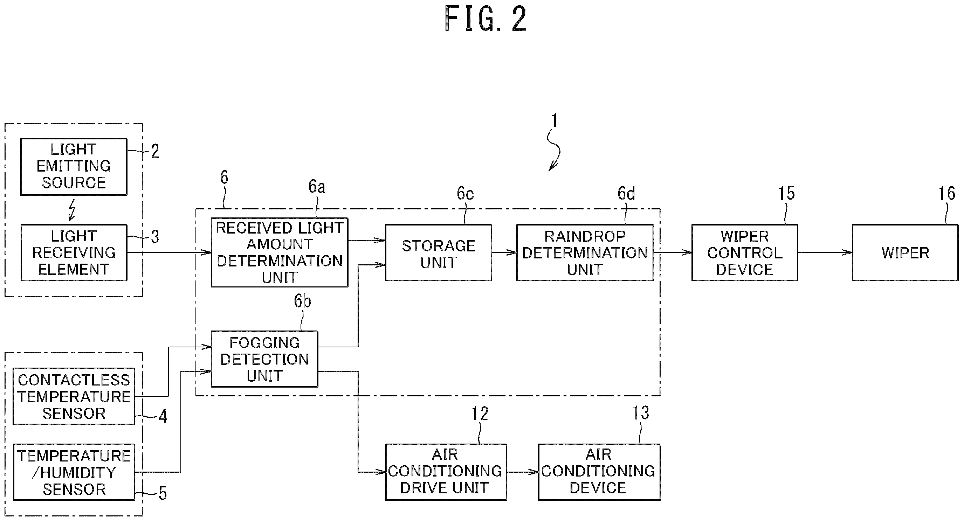

FIG. 2 is a functional block diagram illustrating one example of the rain sensor 1.

Respective detection signals of the light receiving element 3, the contactless temperature sensor 4, and the temperature/humidity sensor 5 are input to a calculation processing unit 6. The calculation processing unit 6 includes the received light amount determination unit 6a, a fogging detection unit 6b, a storage unit 6c, and a raindrop determination unit 6d.

The received light amount determination unit 6a receives the detection signal of the light receiving element 3, and sets a flag F1 to F1 = 1 if the amount of light received in the light receiving element 3 is smaller than a previously set threshold value, and sets the flag F1 to F1 = 0 if it is equal to or larger than the threshold value. The flag F1 is stored in the storage unit 6c, and the received light amount determination unit 6a is adapted to sequentially update the flag F1 of the storage unit 6c in accordance with a determination result. The received light amount determination unit 6a, the light emitting source 2, and the light receiving element 3 form an optical detection unit.

The fogging detection unit 6b calculates relative humidity in the vicinity of the rear-view mirror on the basis of the detection signal of the temperature/humidity sensor 5. Additionally, the fogging detection unit 6b detects dew point temperature on the basis of the calculated relative humidity and the internal air temperature (i.e., temperature in the vehicle cabin) detected by the temperature/humidity sensor 5, and determines whether the windshield glass 11 is foggy from the detected dew point temperature and the detection signal of the contactless temperature sensor 4, i.e., the surface temperature of the inner surface 11a of the windshield glass 11 (hereinafter also referred to as "glass temperature"). Specifically, the fogging detection unit 6b sets a temperature threshold value on the basis of the glass temperature, and determines that the windshield glass 11 is foggy if the dew point temperature calculated from the detection signal of the temperature/humidity sensor 5 is equal to or more than the temperature threshold value. If, conversely, the dew point temperature is less than the temperature threshold value, the fogging detection unit 6b determines that the windshield glass 11 is not foggy. Here, the temperature threshold value is set to a temperature that allows it to detect that fogging has occurred and that allows it to detect that fogging is likely to occur. Specifically, the temperature threshold value is set to a temperature lower than the glass temperature, and is set to a value that allows it to regard that fogging occurs if the dew point temperature increases more than the temperature. In other words, the fogging detection unit 6b is adapted to determine that fogging has occurred at a step before fogging actually occurs. Then, when it is determined that fogging has occurred, the fogging detection unit 6b operates an air conditioning device 13 such as a defroster via an air conditioning drive unit 12 to eliminate the fogging on the windshield glass 11 (a fogging elimination processing unit).

Additionally, the fogging detection unit 6b sets a flag F2 to F2 = 1 if the dew point temperature is determined to be equal to or more than the temperature threshold value, and sets the flag F2 to F2 = 0 if the dew point temperature is determined to be less than the temperature threshold value. In addition, the fogging detection unit 6b is adapted to store the flag F2 at a plurality of time points in the storage unit 6c. For example, it is adapted to store a flag F2(t) at a time point t and a flag F2(t-1) at a time point t-1, which is a time point immediately before the time point t1. Then, the fogging detection unit 6b is adapted to sequentially update the flags F2(t) and F2(t-1) in the storage unit 6c in accordance with the determination result. Note that, here, while the flags F2(t) and F2(t-1) for two cycles are stored, the flag F2 for three or more cycles may be stored.

The raindrop determination unit 6d determines whether or not a raindrop is adherent to the windshield glass 11 on the basis of a detection result of the received light amount determination unit 6a and a detection result of the fogging detection unit 6b. Specifically, the raindrop determination unit 6d determines on the basis of the flag F1(t) and the flags F2(t) and F2(t-1) stored in the storage unit 6c. The determination result of the raindrop determination unit 6d is the detection result of the rain sensor 1, and the detection result of the rain sensor 1 is output to the wiper control device 15. The wiper control device 15 starts the wiper 16 if the rain sensor 1 determines that a raindrop is adherent to the windshield glass 11 (raindrop detected), and stops the wiper 16 conversely if it determines that no raindrop is adherent thereto (no raindrop detected).

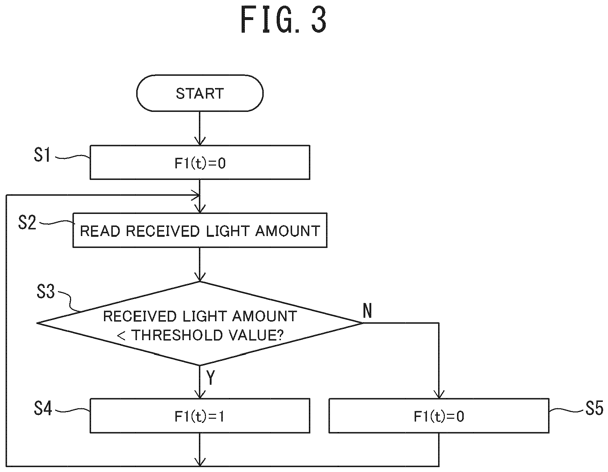

FIG. 3 is a flowchart illustrating one example of a processing procedure by the received light amount determination unit 6a. The received light amount determination unit 6a executes calculation processing illustrated in FIG. 3 at a previously set predetermined cycle. Upon starting, first, the flag F1(t) is initialized to F1(t) = 0 (step S1). Next, the detection signal from the light receiving element 3, i.e., the amount of received light is read (step S2). If the amount of received light is less than a threshold value, flow proceeds from step S3 to step S4, where the flag is set to F1(t) = 1, and then flow returns to step S2. In the received light amount determination unit 6a, if, conversely, the amount of received light is equal to or more than the threshold value, flow proceeds from step S3 to step S5, where the flag is set to F1(t) = 0, and then flow returns to step S2.

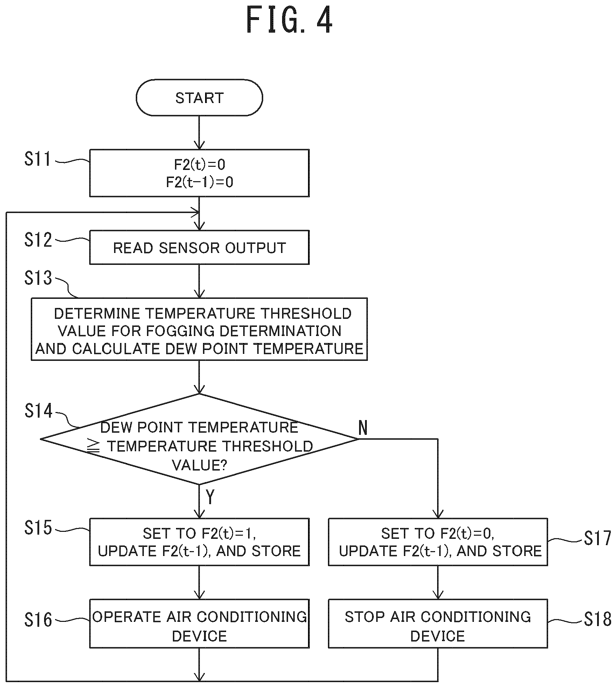

FIG. 4 is a flowchart illustrating one example of a processing procedure by the fogging detection unit 6b. The fogging detection unit 6b executes calculation processing illustrated in FIG. 4 at a previously set predetermined cycle. In the fogging detection unit 6b, first, the flags F2(t1) and F2(t-1), respectively, are initialized to "0" (step S11). Next, the detection signals of the contactless temperature sensor 4 and the temperature/humidity sensor 5 are read (step S12), and on the basis of the detection signals, relative humidity is calculated, furthermore followed by calculation of dew point temperature. Additionally, a temperature threshold value is set on the basis of the detection signal of the contactless temperature sensor 4 (step S13).

Then, if the dew point temperature is equal to or more than the temperature threshold value, flow proceeds from step S14 to step S15, where the value of the flag F2 (t-1) is updated to the value of F2(t), and F2(t) = 1 is set. Then, flow proceeds to step S16 to operate the air conditioning device 13, and then, flow returns to step S12. If, conversely, the dew point temperature is less than the temperature threshold value, flow proceeds from step S14 to step S17, where the value of the flag F2 (t-1) is updated to the value of F2 (t), and F2 (t) = 0 is set. Then, the air conditioning device 13 is stopped (step S18). Then, flow returns to step S12.

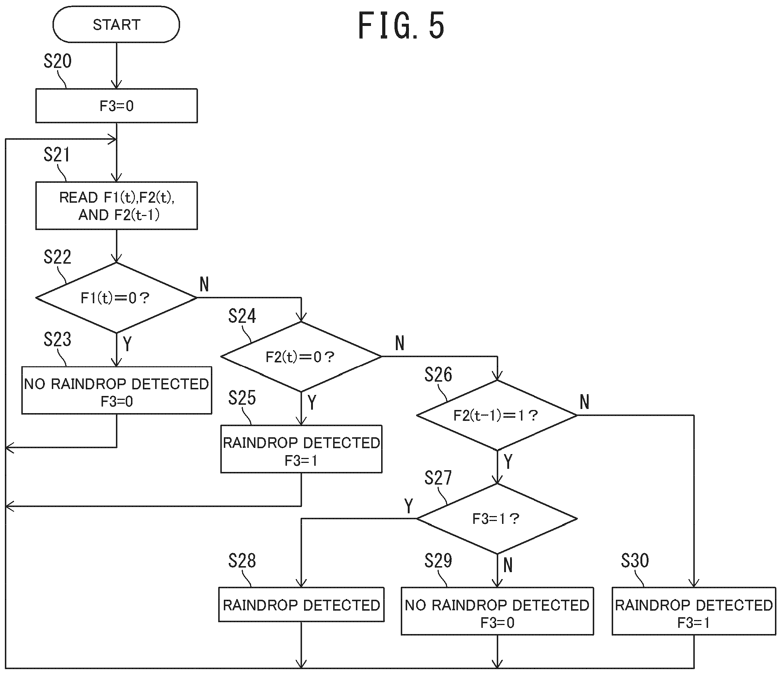

FIG. 5 is a flowchart illustrating one example of a processing procedure by the raindrop determination unit 6d. The raindrop determination unit 6d executes calculation processing illustrated in FIG. 5 at a previously set predetermined cycle.

In the raindrop determination unit 6d, first, at step S20, a flag F3 is initialized to F3 = 0. Next, the flag F1(t) and the flags F2 (t) and F2(t-1) are read from the storage unit 6c (step S21). Then, it is determined whether or not the flag F1(t) is F1(t)=0 (step S22), and if F1(t) = 0, it is determined that no raindrop is adherent to the windshield glass 11, i.e., that there is no raindrop detected. Additionally, the flag F3 is set to F3 = 0 (step S23). If the amount of received light received by the light receiving element 3 is equal to or more than the threshold value, it means that no raindrop is adherent to the windshield glass 11, and there is no fogging thereon. In other words, there is no raindrop detected.

On the other hand, at step S22, if the flag F1(t) is F1(t) = 1, flow proceeds to step S24 to determine whether or not the flag F2(t) is F2(t) = 0. If F2(t) = 0, flow proceeds from step S24 to step S25, when it is determined that the flag F1(t) has been set to F1(t) = 1 due to adhesion of a raindrop to the windshield glass 11, i.e., that a raindrop has been detected. Additionally, the flag F3 is set to F3 = 1. Since the amount of received light received by the light receiving element 3 is less than the threshold value, and it is determined that there is no fogging at this time point, it can be regarded that due to the adhesion of a raindrop to the windshield glass 11, the flag F1(t) has been set to F1(t) = 1. In other words, there is a raindrop detected.

In addition, at step S24, when the flag F2(t) is set to F2(t)=1, flow proceeds to step S26 to determine whether the flag F2(t-1) is F2(t-1) = 1 or not. If F2(t-1) = 1, flow proceeds to step S27 to determine whether the flag F3 is F3=1 or not. If F3 = 1, flow proceeds to step S28, when it is determined that a raindrop has been detected. If F3 = 0, flow proceeds to step S29, when it is determined that no raindrop has been detected. Additionally, the flag F3 is set to F3=0. In addition, at step S26, if F2(t-1) = 0, it is determined that a raindrop has been detected, and the flag F3 is set to F3 = 1 (step S30).

In other words, when it is determined that fogging has already occurred even if the amount of received light in the light receiving element 3 is less than the threshold value, the following two are considered as a reason why the amount of received light in the light receiving element 3 is less than the threshold value: one reason is due to the occurrence of fogging, and the other one is due to the adhesion of a raindrop. If F2 (t-1)= 1 (step S26) and it is determined that fogging has continuously occurred, there is a possibility that the occurrence of fogging has caused the amount of received light to be less than the threshold value. Thus, at this time point, it is determined that no raindrop has been detected (step S29). If, conversely, F2 (t-1) = 0 (step S26) and it is determined at the present time point (t) that fogging has occurred, but it is determined at an immediately preceding time point (t-1) that no fogging has occurred, it can be regarded that the reduced amount of received light is not due to fogging but due to the adhesion of a raindrop. Thus, it is determined as raindrop detection (step S30).

Then, after determining whether a raindrop has or has not been detected, flow returns to step S21.

Next, operation of the above embodiment will be described.

In a state when it is not raining and the windshield glass 11 is not foggy, the amount of received light in the light receiving element 3 is equal to or more than the threshold value. Thus, the flag F1 is set to F1(t) = 0 (steps S3 and S5 in FIG. 3), and the flags F2 are set to F2 (t) = 0 and F2 (t-1) = 0 (steps S14 and S17 in FIG. 4). As a result, flow proceeds from step S21 to step S23 via step S22 in FIG. 5, and it is determined that no raindrop has been detected. Additionally, since the flag F2 is set to F2(t) = 0, the air conditioning device 13 is not operated (step S18 in FIG. 4).

When it begins to rain in this state, raindrops adhere to the windshield glass 11, and thereby the amount of received light in the light receiving element 3 becomes less than the threshold value, so that the flag is set to F1(t) = 1 (steps S3 and S4 in FIG. 3). Due to that, flow proceeds from step S21 to step S24 via step S22 in FIG. 5. At this time, since the windshield glass 11 is not foggy, the flags F2 are set to F2(t) = 0 and F2 (t-1) = 0. Thus, flow proceeds from step S24 to step S25, when it is determined that raindrops have been detected. In response to this, the wiper control device 15 starts the wiper 16.

Then, when the temperature of the windshield glass 11 is reduced due to the rainfall, the temperature threshold value for determining fogging is reduced accordingly, and dew point temperature becomes equal to or more than the temperature threshold value, the flag is set to F2(t) = 1 (steps S14 and S15 in FIG. 4), so that the air conditioning device 13 is started (step S16 in FIG. 4). Additionally, since the flag has been set to F2(t) = 1, flow proceeds from step S21 to step S26 via steps S22 and S24 in FIG. 5. Since the flag is F2 (t-1) = 0 at this time point, flow proceeds from step S26 to step S30, when it is determined that raindrops have been detected, and the flag is set to F3 = 1. As a result, the wiper 16 is continuously driven.

Then, while the dew point temperature continues to be equal to or more than the temperature threshold value, the respective flags are set to F1(t) = 1, F2(t) = 1, and F2(t-1) = 1. Thus, flow proceeds from step S21 to step S28 via steps S22, S24, S26, and S27 in FIG. 5, and it is continuously determined that raindrops have been detected, so that the wiper 16 is driven.

In this state, the air conditioning device 13 is started to adjust temperature and humidity in the vehicle cabin, and when the dew point temperature is reduced to be less than the temperature threshold value, the flag is set to F2(t) = 0 (steps S14 and S17 in FIG. 4). As a result, the air conditioning device 13 is stopped (step S18). Additionally, since the flag is set to F2(t) = 0, flow proceeds from step S21 to step S25 via steps S22 and S24 in FIG. 5, when it is continuously determined that raindrops have been detected, so that the wiper 16 is driven.

Then, when it stops to rain, and the raindrops on the windshield glass 11 are eliminated, the amount of received light in the light receiving element 3 becomes equal to or more than the threshold value, so that the flag is set to F1(t) = 0 (step S5 in FIG. 3). Additionally, since the flags F2 are F2 (t) = 0 and F2 (t-1) = 0 (step S17 in FIG. 4), flow proceeds from step S21 to step S23 via step S22 in FIG. 5, when it is determined that no raindrop has been detected, and the flag F3 is reset to F3 = 0.

Then, the rain sensor 1 determines that no raindrop has been detected, whereby the wiper 16 is stopped. Thus, the wiper 16 is started when rain begins to fall, and stopped when the rain stops.

In addition, for example, in a state when the outside air temperature is relatively low, it is not raining, and the windshield glass 11 is not foggy, there is neither adherent raindrop nor detected fogging. Thus, flow proceeds from step S21 to step S23 via step S22 in FIG. 5, when it is determined that no raindrop has been detected. Additionally, the flag F3 is set to F3 = 0. In this state, when temperature in the vehicle cabin increases due to drinking of a hot drink or the like, and then when the dew point temperature accordingly increases to be equal to or more than the temperature threshold value, it is determined that fogging has been detected (step S15 in FIG. 4), whereby the air conditioning device 13 is driven (step S16). In other words, the determination that fogging has been detected is made at the time point before fogging actually occurs, and thereby the air conditioning device 13 is driven, thus resulting in suppression of the occurrence of fogging.

In this state, when the windshield glass 11 begins to fog although the air conditioning device 13 is driven, the amount of received light in the light receiving element 3 is reduced, and the flag F1 is set to F1(t) = 1, flow proceeds from step S21 to step S24 via step S22 in FIG. 5. At this time point, the flags F2 are F2(t) = 1 and F2(t-1) = 1, and the flag F3 is F3 = 0. Thus, flow proceeds from step S24 to step S29 via steps S26 and S27, where it is determined that no raindrop has been detected.

In other words, since it is continuously determined that fogging has been detected, there is a possibility that fogging on the windshield glass 11 has reduced the amount of received light in the light receiving element 3, due to which it has been determined that a raindrop has been detected. Thus, when fogging is continuously detected, it is determined that no raindrop has been detected even if the amount of received light in the light receiving element 3 is reduced. This can avoid unnecessary driving of the wiper 16 when the amount of received light in the light receiving element 3 is reduced due to the occurrence of fogging on the windshield glass 11.

On the other hand, when, in a state when it is not raining, the windshield glass 11 is not foggy, and it is determined that no raindrop has been detected, the temperature in the vehicle cabin increases due to drinking of a hot drink or the like, and the dew point temperature accordingly increases to be equal to or more than the temperature threshold value, it is determined that fogging has been detected. Additionally, when, simultaneously with the determination that fogging has been detected, it begins to rain and the amount of received light in the light receiving element 3 is reduced, the flags are F1(t) = 1, F2 (t) = 1, and F2 (t-1) = 0 at this time point. Thus, flow proceeds to step S30 via steps S21, S22, S24, and S26, when it is determined that raindrops have been detected, and the flag is set to F3 = 1. In other words, since it is determined that fogging has been detected at the time point before fogging actually occurs, it can be regarded that even in the state when the amount of received light in the light receiving element 3 has been reduced and fogging has been detected, the reduced amount of received light in the light receiving element 3 is not due to fogging if there is no fogging detected in an immediately preceding detection cycle. Accordingly, the wiper 16 is started when rain begins to fall.

As described above, when the amount of received light in the light receiving element 3 is equal to or more than the threshold value, it is determined that no raindrop has been detected, whereas when the amount of received light in the light receiving element 3 is less than the threshold value, it is determined in accordance with the situation of fogging detection whether the reduced amount of received light is due to the adhesion of a raindrop or due to the occurrence of fogging on the windshield glass 11. Thus, when the amount of received light has been reduced due to the occurrence of fogging on the windshield glass 11, an erroneous detection that a raindrop is adherent can be avoided. As a result, it is avoidable that due to the erroneous detection, the wiper 16 is driven although it is actually not raining, so that reliability of the rain sensor 1 can be improved, and also malfunction of the wiper 16 can be prevented.

In addition, it is determined that fogging has been detected at a time point when fogging is likely to occur before fogging actually occurs on the windshield glass 11. This allows the air conditioning device 13 to be started at the time point before fogging actually occurs, which can suppress fogging from actually occurring.

Additionally, the contactless temperature sensor 4 for detecting fogging can contactlessly detect temperature of the windshield glass 11. Here, when using a contact type temperature sensor that detects temperature of the windshield glass 11 by contacting with the windshield glass 11, the contact type temperature sensor needs to be arranged so as not to obstruct the optical path between the light emitting source 2 and the light receiving element 3, since the light receiving element 3 is adapted to receive reflected light reflected on the windshield glass 11. Due to this, it is difficult to match a region for detecting the reflected light received by the light receiving element 3 on the windshield glass 11 with a region for temperature detection by the contact type temperature sensor on the windshield glass 11, as a result of which it is difficult to highly accurately detect fogging on the windshield glass 11. On the other hand, since the rain sensor 1 illustrated in FIGS. 1A and 1B contactlessly detects temperature of the windshield glass 11, the region for detecting the reflected light received by the light receiving element 3 on the windshield glass 11 can be included in the region for temperature detection by the contact type temperature sensor on the windshield glass 11. As a result, fogging can be more highly accurately detected. Thus, the air conditioning device 13 for eliminating fogging on the windshield glass 11 can be driven and stopped in accordance with the actual situation of occurrence of fogging. This can avoid driving of the air conditioning device 13 at an unnecessary time point, whereby power consumption for driving the air conditioning device 13 can be reduced accordingly. Particularly, in the case of electric vehicles, operating the air conditioning device 13 such as a defroster that generates hot air requires heat generation, due to which a large amount of power consumption is required. Thus, saving the time for driving of the air conditioning device 13 is effective in reducing power consumption.

Note that while the above embodiment has described the case when a value lower than a glass temperature detected by the contactless temperature sensor 4 is set as the temperature threshold value, the invention is not limited thereto, and the detected glass temperature may be set as a temperature threshold value.

While the embodiments of the present invention have been described hereinabove, the above embodiment exemplifies devices and methods for embodying the technological idea of the present invention, and the technological idea of the present invention does not specify the materials, shapes, structures, arrangements, and the like of components. The technological idea of the present invention can be variously modified within the technological scope defined by the appended claims.

### Reference Signs List

- 1:: Rain sensor
- 2:: Light emitting source
- 3:: Light receiving element
- 4:: Contactless temperature sensor
- 5:: Temperature/humidity sensor
- 6:: Calculation processing unit
- 6a:: Received light amount determination unit
- 6b:: Fogging detection unit
- 6c:: Storage unit
- 6d:: Raindrop determination unit
- 11:: Windshield glass
- 13:: Air conditioning device
- 16:: Wiper

## Claims

1. A rain sensor comprising:
an optical detection unit configured to output a detection result different in when a raindrop is adherent to a windshield glass of a vehicle and when no raindrop is adherent to the windshield glass;
a temperature/humidity sensor configured to detect temperature and humidity in a vehicle cabin of the vehicle;
a contactless temperature sensor configured to contactlessly detect temperature of the windshield glass;
a fogging detection unit configured to detect that fogging has occurred or is likely to occur on a vehicle cabin inner side of the windshield glass on a basis of detection signals of the temperature/humidity sensor and the contactless temperature sensor; and
a raindrop determination unit configured to determine whether or not a raindrop is adherent to the windshield glass on a basis of a detection result of the optical detection unit and a detection result of the fogging detection unit,
wherein a region for detecting the temperature by the contactless temperature sensor includes a region for detecting the raindrop by the optical detection unit.

2. The rain sensor according to claim 1, wherein the optical detection unit includes a light emitting source provided in the vehicle cabin and a light receiving element configured to receive light emitted by the light emitting source and reflected at an interface between an outer surface of the windshield glass and an outside.

3. The rain sensor according to claim 2, wherein the region for detecting the raindrop by the optical detection unit is a region for detecting a reflected light of the light emitting source reflected at the interface between the outer surface of the windshield glass and the outside, which is received by the light receiving element.

4. The rain sensor according to any one of claims 1 to 3, comprising a fogging elimination processing unit configured to, when the fogging detection unit detects that fogging has occurred or is likely to occur on the windshield glass, drive an air conditioning device to eliminate the fogging on the windshield glass.

5. The rain sensor according to any one of claims 1 to 4, wherein the raindrop determination unit does not determine that a raindrop is adherent to the windshield glass if the detection result of the optical detection unit changes to a result indicating that a raindrop is adherent to the windshield glass when the fogging detection unit detects that fogging has occurred or is likely to occur on the windshield glass.

6. The rain sensor according to any one of claims 1 to 5, wherein the contactless temperature sensor is adapted to detect infrared light emitted from the windshield glass, and detect the temperature of the windshield glass on a basis of the infrared light.

## Patentansprüche

1. Regensensor, umfassend:
eine optische Erfassungseinheit, die dazu konfiguriert ist, ein Erfassungsergebnis auszugeben, das unterschiedlich ist, wenn ein Regentropfen an einer Windschutzscheibe eines Fahrzeugs haftet und wenn kein Regentropfen an der Windschutzscheibe haftet;
einen Temperatur-/Feuchtigkeitssensor, der dazu konfiguriert ist, eine Temperatur und Feuchtigkeit in einem Fahrzeuginnenraum des Fahrzeugs zu erfassen;
einen kontaktlosen Temperatursensor, der dazu konfiguriert ist, kontaktlos eine Temperatur der Windschutzscheibe zu erfassen;
eine Beschlagerfassungseinheit, die dazu konfiguriert ist, auf einer Grundlage von Erfassungssignalen des Temperatur-/Feuchtigkeitssensors und des kontaktlosen Temperatursensors zu erfassen, dass Beschlagen an einer Innenseite des Fahrzeuginnenraums der Windschutzscheibe erfolgt ist oder wahrscheinlich erfolgen wird; und
eine Regentropfenbestimmungseinheit, die dazu konfiguriert ist, auf einer Grundlage eines Erfassungsergebnisses der optischen Erfassungseinheit und eines Erfassungsergebnisses der Beschlagerfassungseinheit zu bestimmen, ob ein Regentropen an der Windschutzscheibe haftet oder nicht,
wobei ein Bereich zum Erfassen der Temperatur durch den kontaktlosen Temperatursensor einen Bereich zum Erfassen des Regentropfens durch die optische Erfassungseinheit beinhaltet.

2. Regensensor nach Anspruch 1, wobei die optische Erfassungseinheit eine lichtemittierende Quelle beinhaltet, die in dem Fahrzeuginnenraum bereitgestellt ist, und ein lichtempfangendes Element, das dazu konfiguriert ist, von der lichtemittierenden Quelle emittiertes und an einer Grenzfläche zwischen einer Außenfläche der Windschutzscheibe und einer Außenseite reflektiertes Licht zu empfangen.

3. Regensensor nach Anspruch 2, wobei der Bereich zum Erfassen des Regentropfens durch die optische Erfassungseinheit ein Bereich zum Erfassen eines reflektierten Lichts der lichtemittierenden Quelle ist, das an der Grenzfläche zwischen der Außenfläche der Windschutzscheibe und der Außenseite reflektiert wird, das von dem lichtempfangenden Element empfangen wird.

4. Regensensor nach einem der Ansprüche 1 bis 3, umfassend eine Beschlagbeseitigungsverarbeitungseinheit, die dazu konfiguriert ist, wenn die Beschlagerfassungseinheit erfasst, dass Beschlagen auf der Windschutzscheibe erfolgt ist oder wahrscheinlich erfolgen wird, eine Klimaanlagenvorrichtung anzutreiben, um den Beschlag an der Windschutzscheibe zu beseitigen.

5. Regensensor nach einem der Ansprüche 1 bis 4, wobei die Regentropfenbestimmungseinheit nicht bestimmt, dass ein Regentropen an der Windschutzscheibe haftet, falls das Erfassungsergebnis der optischen Erfassungseinheit sich zu einem Ergebnis ändert, das angibt, dass ein Regentropfen an der Windschutzscheibe haftet, wenn die Beschlagerfassungseinheit erfasst, dass Beschlagen auf der Windschutzscheibe erfolgt ist oder wahrscheinlich erfolgen wird.

6. Regensensor nach einem der Ansprüche 1 bis 5, wobei der kontaktlose Temperatursensor dazu angepasst ist, von der Windschutzscheibe emittiertes Infrarotlicht zu erfassen und die Temperatur der Windschutzscheibe auf einer Grundlage des Infrarotlichts zu erfassen.

## Revendications

1. Capteur de pluie comprenant :
une unité de détection optique configurée pour délivrer un résultat de détection différent quand une goutte de pluie adhère à une vitre de pare-brise d'un véhicule et quand aucune goutte de pluie n'adhère à la vitre de pare-brise ;
un capteur de température/humidité configuré pour détecter une température et une humidité dans un habitacle de véhicule du véhicule ;
un capteur de température sans contact configuré pour détecter sans contact une température de la vitre de pare-brise ;
une unité de détection de buée configurée pour détecter qu'une buée est apparue ou est susceptible d'apparaître sur un côté intérieur d'habitacle de véhicule de la vitre de pare-brise sur la base de signaux de détection du capteur de température/humidité et du capteur de température sans contact ; et
une unité de détermination de goutte de pluie configurée pour déterminer si une goutte de pluie adhère ou non à la vitre de pare-brise sur la base d'un résultat de détection de l'unité de détection optique et d'un résultat de détection de l'unité de détection de buée,
dans lequel une région pour détecter la température par le capteur de température sans contact inclut une région pour détecter la goutte de pluie par l'unité de détection optique.

2. Capteur de pluie selon la revendication 1, dans lequel l'unité de détection optique inclut une source d'émission de lumière fournie dans l'habitacle de véhicule et un élément de réception de lumière configuré pour recevoir une lumière émise par la source d'émission de lumière et réfléchie sur une interface entre une surface extérieure de la vitre de pare-brise et un extérieur.

3. Capteur de pluie selon la revendication 2, dans lequel la région pour détecter la goutte de pluie par l'unité de détection optique est une région pour détecter une lumière réfléchie de la source d'émission de lumière réfléchie sur une interface entre la surface extérieure de la vitre de pare-brise et l'extérieur, qui est reçue par l'élément de réception de lumière.

4. Capteur de pluie selon l'une quelconque des revendications 1 à 3, comprenant une unité de traitement d'élimination de buée configurée pour, quand l'unité de détection de buée détecte qu'une buée est apparue ou est susceptible d'apparaître sur la vitre de pare-brise, actionner un dispositif de conditionnement d'air pour éliminer la buée sur la vitre de pare-brise.

5. Capteur de pluie selon l'une quelconque des revendications 1 à 4, dans lequel l'unité de détermination de goutte de pluie ne détermine pas qu'une goutte de pluie adhère à la vitre de pare-brise si le résultat de détection de l'unité de détection optique change pour un résultat indiquant qu'une goutte de pluie adhère à la vitre de pare-brise quand l'unité de détection de buée détecte qu'une buée est apparue ou est susceptible d'apparaître sur la vitre de pare-brise.

6. Capteur de pluie selon l'une quelconque des revendications 1 à 5, dans lequel le capteur de température sans contact est adapté pour détecter une lumière infrarouge émise par la vitre de pare-brise, et détecter la température de la vitre de pare-brise sur la base de la lumière infrarouge.
